# EUROPEAN PATENT APPLICATION

(11) **EP 1 457 816 A2**
(43) Date of publication of application: **15.09.2004**
(21) Application number: 04005706.9
(22) Date of filing: 10.03.2004
(51) Int. Cl.: G03B 17/53, H04N 1/00, G03B 15/02, G03B 15/06

(54) **Self-photography booth with illumination control**

(30) Priority: 10.03.2003 JP 2003063326; 07.08.2003 JP 2003206501
(71) Applicant: IKEDA PHOTOGRAPHY INC., Nishisonogi-gun, Nagasaki (JP)
(72) Inventor: Tadahiko, Ikeda, Nagasaki-shi Nagasaki (JP)
(74) Representative: Schaumburg, Thoenes, Thurn, Landskron, Patentanwälte

(57) **Abstract**

A photographing apparatus (1) provided in a box, includes a photographing room (5) in which a person to be photographed is situated; and an equipment storage room (6) for storing a photographing device (8) for photographing the person to be photographed (4), and image-processing equipment (16) for processing an image obtained by the photographing device, wherein the image-processing equipment outputs the processed image. The photographing room (5) includes illumination devices (11;12,13) for illuminating the person to be photographed (4), a display device (9a) for displaying a plurality of photograph data of images photographed under various illumination conditions in the photographing room, and an input device (9) for inputting an input signal for changing a illumination condition in the photographing room (5) with reference to the photograph data.

## Description

### BACKGROUND OF THE INVENTION

### 1. Field of the Invention

The present invention relates to a self-supporting box type photographing apparatus (an ID-photo apparatus) for automatically photographing a person to be photographed in a booth, in particular, so as to obtain an ID photograph of a still image having good quality by appropriately setting illumination conditions of the user (person to be photographed).

### 2. Description of the Related Art

Various types of coin-operated photographing apparatus for obtaining ID photographs for an ID card, a membership card, a passport, a driver's license, and a student card or for obtaining instant photographs known as "Print Club" photographs or stickers have been proposed in, for example, Japanese Patent Laid-Open Publication Nos. 2002-281326, 2002-023256, and 2001-209116.

In such a type of photographing apparatus, a self-supporting type box (booth) includes two spaces formed by a partition: a space occupied by a person to be photographed (a photographing room) and a space storing various types of equipment required for photography (an equipment storage room). In the case of a Print Club type photographing apparatus, a photographing room is generally formed by a partition made out of a simple polyvinyl sheet.

Equipment provided in the box which is required for photography includes, for example: a illumination device for illuminating a person to be photographed, a photographing device for photographing the user (a CCD camera or a digital camera), a printing device for printing (image-processing) image information obtained by the photographing device, an output device for outputting an ID photograph printed by the printing device to a photograph slot provided on the outer side of the box, and a control device (a microcomputer) for controlling the various devices.

The photographing apparatuses are classified into a box type and a simplified box type which is simply partitioned by a polyvinyl sheet, etc. In the case of the box type, a person to be photographed sits on a stool in the photographing room in the box. Thereafter, the user inputs various photography-related information (for example, the number of photographs to be taken, the size and the shape of photographs, and the like) via the input device.

Subsequently, the control device controls the photographing device so as to photograph the upper half of the front body, mainly the face of the user, based on the input information via the input device. Thereafter, the control device outputs the resulting ID photographs to the photograph slot.

In a conventional box-type photographing apparatus, the upper half of the front body of a person is photographed. Illumination conditions for the illumination device for illuminating the user, such as the type of light source, the number of light sources, a light divergence conditions are prespecified by the control device. As the conditions for obtaining ID photographs of good quality, the illumination conditions such as the quality of illumination light for illuminating the user, and the illumination system have not been sufficiently considered with respect to the user.

Therefore, the photographs obtained by most of the box type automatic photographing apparatuses currently on the market can only offer low quality photographs compared the quality of the photographs taken by professional photographers.

Moreover, since the illumination conditions in the photographing room are kept constant, the user cannot obtain a photograph meeting his/her own preferences.

### SUMMARY OF THE INVENTION

The present invention provides a box-type photographing apparatus for easily obtaining a photograph which can achieve a desired quality of photograph (an ID photograph or a portrait photograph) by illuminating the user positioned in a photographing room with appropriate diffuse light (soft light having a continuous gradation) the user. The present invention also provides a photographing apparatus for obtaining photographs with different illumination effects by changing an illumination balance of the diffuse light which is illuminated on the user.

In addition, the present invention also provides a photographing apparatus for easily obtaining an ID photograph (portrait photograph) of good quality by illuminating the user positioned in the photographing room with diffuse light having little variation in illuminance and having a continuously changing light intensity distribution, i.e., a "soft light having a continuous gradation" (light having low contrast in brightness) by employing a portrait illumination technique.

According to an aspect of the present invention, a photographing apparatus provided in a box, is provided, including a photographing room in which a person to be photographed is situated, and an equipment storage room for storing a photographing device for photographing the person to be photographed, and image-processing equipment for processing an image obtained by the photographing device, wherein the image-processing equipment outputs the processed image. The photographing room includes a plurality of illumination devices for illuminating the person to be photographed, a display device for displaying a plurality of photograph data of images photographed under various illumination conditions in the photographing room, and an input device for inputting an input signal for changing a illumination condition in the photographing room with reference to the photograph data.

It is desirable for at least one of the plurality of illumination devices to include a light source, a diffuser member for allowing light rays emitted from the light source to be diffuse-transmitted, a light-shielding member for shielding a portion of the light rays on at least one of a light-incident side and a light-emitting side of the diffuser member, and a control device. Light-emitting directions of the light from the illumination devices are controlled by the control device so as to have an asymmetric illuminance distribution in a photographic space within the photographing room.

It is desirable for the illumination device to be arranged horizontally asymmetric with respect to a position of the person to be photographed in the photographing room, so as to have an asymmetric illuminance distribution in a photographic space within the photographing room.

It is desirable for each of the illumination devices to include at least one flash lamp, and at least one light diffuser panel and an ND filter are provided on a light-emitting side of the flash lamp.

It is desirable for the control device to change an illumination condition of the illumination devices by the input signal via the input device so as to change an illuminance distribution within the photographing room.

It is desirable for the box to include a partition wall which divides the box into two spaces, the partition wall defining the photographing room;
wherein one of the illumination devices is provided on a ceiling of the photographing room and includes a plurality of light sources and a diffuser member.

At least one of the light sources is arranged so that a light-emitting face thereof is oriented toward the partition wall, wherein the remainder of the light sources are arranged so that light-emitting faces thereof are oriented toward the ceiling. Light from the light sources is reflected by at least one of the partition wall and the ceiling to illuminate the person to be photographed through the diffuser member.

It is desirable for the box to include a partition wall which divides the box into two spaces, the partition wall defining the photographing room. One of the illumination devices is provided on a ceiling of the photographing room and includes a plurality of flash lamps and a diffuser member. Two of the flash lamps are arranged so that light-emitting faces thereof are oriented toward the partition wall, wherein the remainder of the flash lamps are arranged so that light-emitting faces thereof are oriented toward the ceiling. Light from the flash lamps is reflected by at least one of the partition wall and the ceiling to illuminate the person to be photographed through the diffuser member.

In another embodiment, a photographing apparatus provided in a box is provided, including a photographing room in which a person to be photographed is situated; an equipment storage room for storing a photographing device for photographing the person to be photographed, and image-processing equipment for processing an image obtained by the photographing device, wherein the image-processing equipment outputs the processed image; and a control device. The photographing room is provided with a plurality of illumination devices for illuminating the user. At least one of the illumination devices includes a light source, a diffuser member for allowing light rays emitted from the light source to be diffuse-transmitted, and a light-shielding member for shielding a portion of the light rays on at least one of a light-incident side and a light-emitting side of the diffuser member. Light-emitting directions of the light from the illumination devices are controlled by the control device so as to have an asymmetric illuminance distribution in a photographic space within the photographing room.

In another embodiment, a photographing apparatus provided in a box is provided, including a photographing room in which a person to be photographed is situated; and an equipment storage room for storing photographing device for photographing the person to be photographed, and image-processing equipment for processing an image obtained by the photographing device to output the processed image. The photographing room is provided with a plurality of illumination devices for illuminating the person to be photographed. The illumination devices are arranged to be horizontally asymmetric with respect to the position of the person to be photographed in the photographing room, so as to have an asymmetric illuminance distribution in a photographic space within the photographing room.

In another embodiment, a photographing apparatus provided in a box is provided, including a photographing room in which a person to be photographed is situated; an equipment storage room for storing a photographing device for photographing the person to be photographed, and image-processing equipment for processing an image obtained by the photographing device, wherein the image-processing equipment outputs the processed image; and an illumination device for illuminating the person to be photographed, the illumination device being provided on a ceiling of the photographing room and having a plurality of light sources, a diffuser member for diffusing light rays from the light sources, and a light-shielding member for shielding a portion of the light rays from the light sources.

It is desirable for the light sources to be arranged asymmetrically in at least one of a horizontal direction and a length direction with respect to the position of the person to be photographed.

It is desirable for a light-shielding pattern of the light-shielding member to be asymmetric in at least one of a horizontal direction and a length direction with respect to the position of the person to be photographed.

It is desirable for at least one illumination device for illuminating the person to be photographed to be provided in the photographing room in addition to the illumination device on the ceiling. At least one of the illumination device includes a light source, a diffuser member for diffuse-transmitting light rays emitted from the light source, and a light-shielding member for shielding a portion of the light rays emitted from the light source.

The photographing room can include a display device for displaying a plurality of photograph data obtained of photographic images taken under various illumination conditions; and an input device for inputting an input signal for changing an illumination condition.

The photographing apparatus can include a control device for changing an illumination condition of the illumination device according to the input signal via the input device so as to change an illuminance distribution within the photographing room.

It is desirable for the light sources of the illumination device provided on the ceiling to be flash lamps. At least one of the flash lamps is arranged so that a light-emitting face does not face the diffuser member, and wherein the remainder of the flash lamps are arranged so that light-emitting faces thereof are oriented toward the ceiling.

It is desirable for an illuminance distribution in the photographic space within the photographing room to be asymmetric.

### BRIEF DESCRIPTION OF THE DRAWINGS

Figure 1 is a perspective view of a first embodiment of a self-supporting box type photographing apparatus, according to the present invention;
Figure 2 is a plan view of the first embodiment of the self-supporting box type photographing apparatus, according to the present invention;
Figure 3 is an illustrative view of a portion of the photographing apparatus shown in Figure 1;
Figure 4 is an illustrative view of a portion of the photographing apparatus shown in Figure 1;
Figures 5A to 5C are illustrative views of an illumination device shown in Figure 1;
Figure 6A is a perspective view of a principal part of the illumination device shown in Figure 1;
Figure 6B is a perspective view of a principal part of an alternative illumination device;
Figure 7A is an illustrative view of the illumination device shown in Figure 1;
Figure 7B is a plan view of the light device shown in Figure 7A;
Figures 8A to 8C are illustrative views in the case where the illumination device shown in Figure 1 is altered according to another embodiment;
Figures 9A and 9B are illustrative views of a flash lamp shown in Figures 8A to 8C;
Figure 10 is an illustrative view in the case where the illumination device shown in Figure 1 is altered according to another embodiment;
Figure 11 is an illustrative view in the case where the illumination device shown in Figure 1 is altered according to another embodiment;
Figure 12 is a perspective view of a second embodiment of a self-supporting box type photographing apparatus, according to the present invention;
Figure 13 is an illustrative view of a portion of the photographing apparatus shown in Figure 12;
Figure 14 is a perspective view of a third embodiment of a self-supporting box type photographing apparatus, according to the present invention;
Figure 15 is a plan view showing a principal portion of the third embodiment of the self-supporting box type photographing apparatus, according to the present invention;
Figures 16A and 16B are illustrative views of the illumination device shown in Figure 14;
Figure 17 is an illustrative side view of the photographing room of the photographing apparatus shown in Figure 14;
Figure 18 is a perspective view of a fourth embodiment of a self-supporting box type photographing apparatus, according to the present invention;
Figure 19 is a perspective view of a fifth embodiment of a self-supporting box type photographing apparatus, according to the present invention;
Figure 20 is an illustrative view of a portion of the photographing apparatus shown in Figure 19;
Figure 21 is an illustrative view of a portion of the photographing apparatus shown in Figure 19;
Figure 22 is an illustrative view of a portion of the photographing apparatus shown in Figure 19;
Figures 23A and 23B are illustrative views of a illumination device shown in Figure 19;
Figure 24 is an illustrative view of the illumination device shown in Figure 19;
Figure 25A is an illustrative view of the illumination device shown in Figure 19;
Figure 25B is a plan view of the light device shown in Figure 25A;
Figures 26A and 26B are illustrative views showing a flash lamp when the flash lamp is used as the illumination device shown in Figure 19;
Figure 27 is a perspective view of a sixth embodiment of a self-supporting box type photographing apparatus, according to the present invention; and
Figure 28 is an illustrative view showing a portion of the photographing apparatus shown in Figure 27.

### DETAILED DESCRIPTION OF THE PREFERRED EMBODIMENTS

### (Embodiment 1)

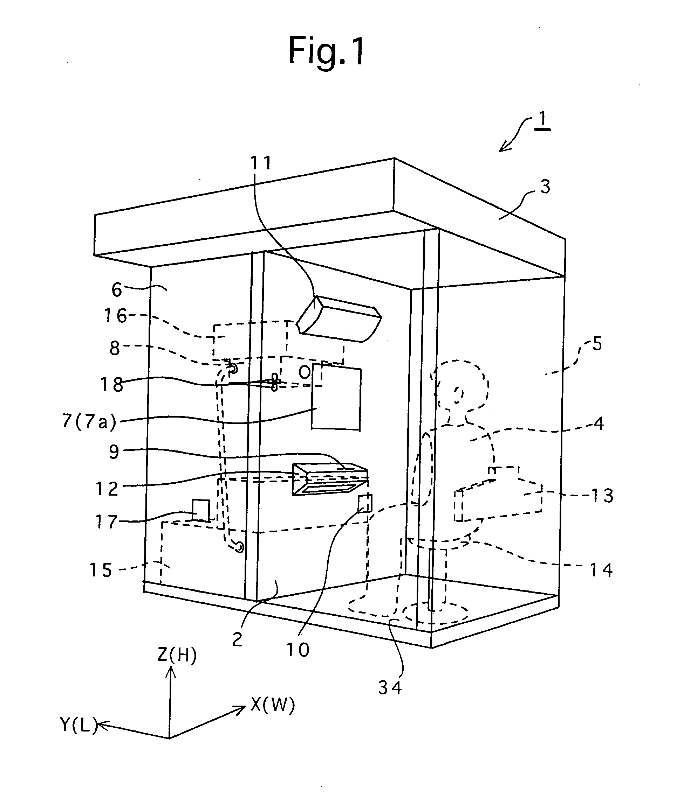

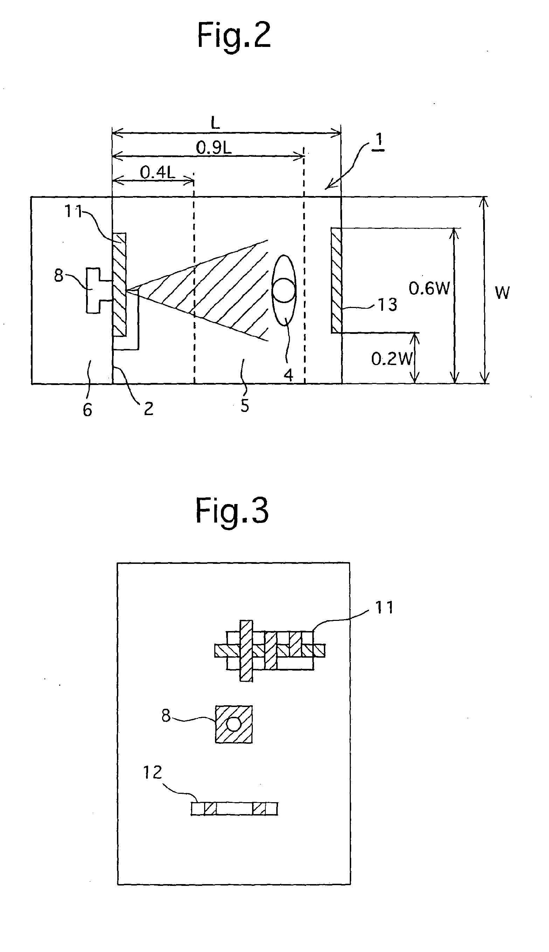

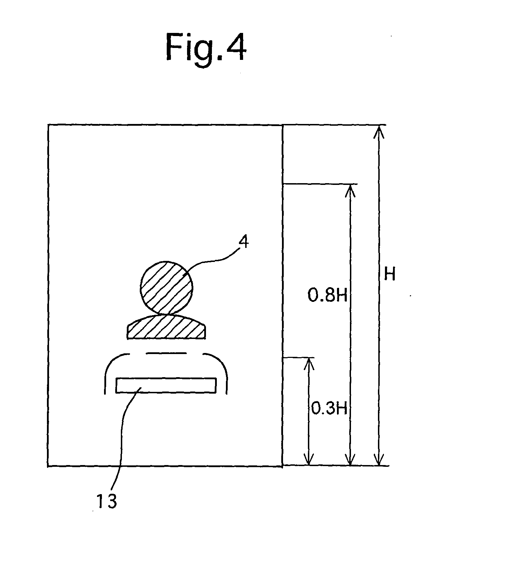

Figure 1 is a perspective view of a first embodiment of a photographing apparatus 1, according to the present invention. Figure 2 is a plan view of the photographing apparatus 1 according to the present invention. Figures 3 and 4 are illustrative views, each showing a portion of the photographing apparatus 1 shown in Figure 1. The photographing apparatus 1 is used for producing an ID photograph, a composite photograph or the like. The photographing apparatus 1 has a substantially box-like shape.

The photographing apparatus 1 is provided with a partition panel (partition wall) 2 for dividing a box-like space 3 of the photographing apparatus 1 into two spaces, i.e., a photographing room 5 and an equipment storage room 6. A person to be photographed 4 is positioned in the photographing room 5, whereas a photographing device (camera) 8 such as a digital still camera or a video camera, and image-processing equipment 16, or the like, are stored in the equipment storage room 6.

A photographic window 7 is provided in the partition panel 2. A half mirror 7a is provided in the photographic window 7. The photographing device (camera) 8 photographs the upper half of the front body of the user 4 through the half mirror 7a of the photographic window 7. In addition, the user 4 can observe various information through the half mirror 7a.

Illumination devices 11 and 12 are provided on the upper and lower center of the partition panel 2, respectively, and the illumination device 13 is provided in the center of the back wall of the photographing room 5 behind where the user 4 is positioned, so as to illuminate the user 4. The detailed structures of the illumination devices 11 through 13 will be described below.

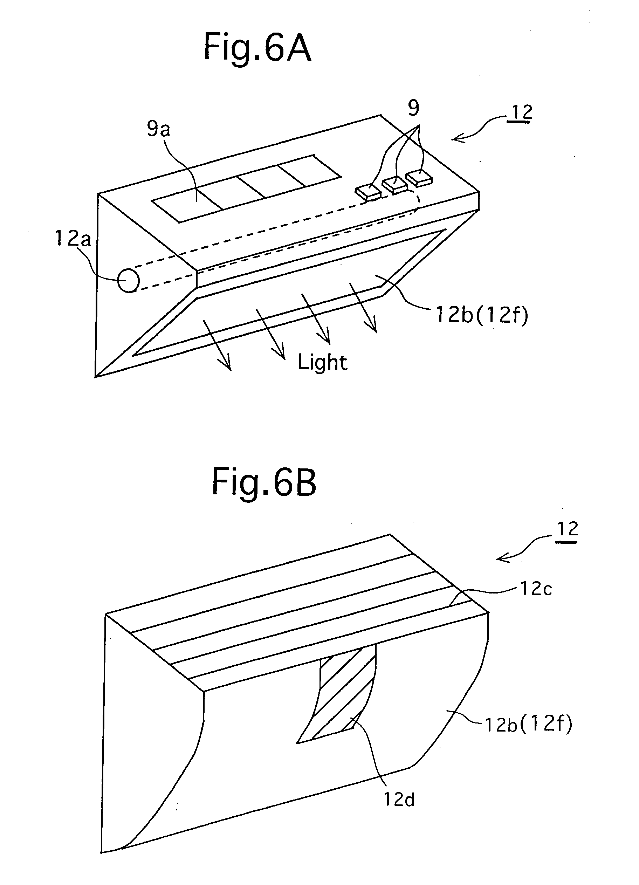

A display device 9a can be provided on the partition panel 2 and/or on the illumination device 12 (see Figure 6A) so as to display a plurality of photograph data taken under various illumination conditions as samples.

An input device 9, such as a switch(es) for photographic operations, is provided on an upper face of the illumination device 12. The user (person to be photographed) 4 inputs data via the input device 9 for obtaining a photograph meeting his (her) objectives/preferences with reference to the photograph data displayed on the display device 9a.

The reference numeral 10 denotes a coin/bill slot.

The reference numeral 14 denotes a stool on which the user 4 sits. The user 4 leans against a backrest (not shown) to directly view the photographic window 7.

The photographing device 8 includes a single focal length lens or a zoom lens which forms an image of the user 4 so that the image is captured by an imaging sensor (CCD) (not shown) to be recorded on a recording medium (not shown). Accordingly, the photographing device 8 obtains a still image.

An image signal from the imaging sensor is input to the image-processing equipment 16.

The image-processing equipment 16 processes the image signal (electric signal) which is output from the imaging sensor.

A personal computer (control device) 15 controls various operations of the photographing apparatus 1.

The control device changes illumination conditions in the photographing room 5 with the illumination devices 11 through 13, based on the input signal from the input device 9.

A fan 18 is provided in the equipment storage room 6 for ventilating the equipment storage room 6.

During image processing, in the case of a color photograph, for example, the image information obtained by the photographing device 8 is converted into three primary colors, i.e., C (cyan), M (magenta), and Y (yellow). Subsequently, a color image is formed based on the color data obtained by the color conversion.

Subsequently, the color image information is printed by a printing device which outputs a photograph through a photograph slot 17.

Although the three illumination devices 11 through 13 are used in the photographing room 5 to illuminate the user 4 in this embodiment, the number of illumination devices can be two or more.

Diffuse light from the illumination devices 11 to 13 are incident on walls and a ceiling of the photographing room 5, so that the walls and the ceiling in turn serve as plane light sources to illuminate the user 4 with diffuse light therefrom.

The user 4 is illuminated with asymmetric soft light rays having a continuous gradation (diffuse light having little difference in light intensity with respect to each of the irradiation positions on the user and having a continuously changing light intensity) by the illumination devices 11 through 13.

The illumination light in the first embodiment is set so that a gradation from a highlight (a region having a high light intensity) to a shadow (a region having a low light intensity) within a photographic space 5a, in which the user 4 is positioned, varies from an f-number of one fifth to one half or less. More specifically, a difference in exposure is set so as to be a maximum of one half.

Such image information of the person photographed (user) with the illumination light is subjected to gradation curve, density, and color balance adjustments and a sharpness adjustment during photographic processing (image-processing) which is carried out by the image-processing equipment 16.

For convenience, as shown in Figures 1 through 3, directions inside the photographing room 5 are referred to as a width direction (W), a length direction (L) and a height direction (H), respectively, with respect to the position of the user 4 as the center.

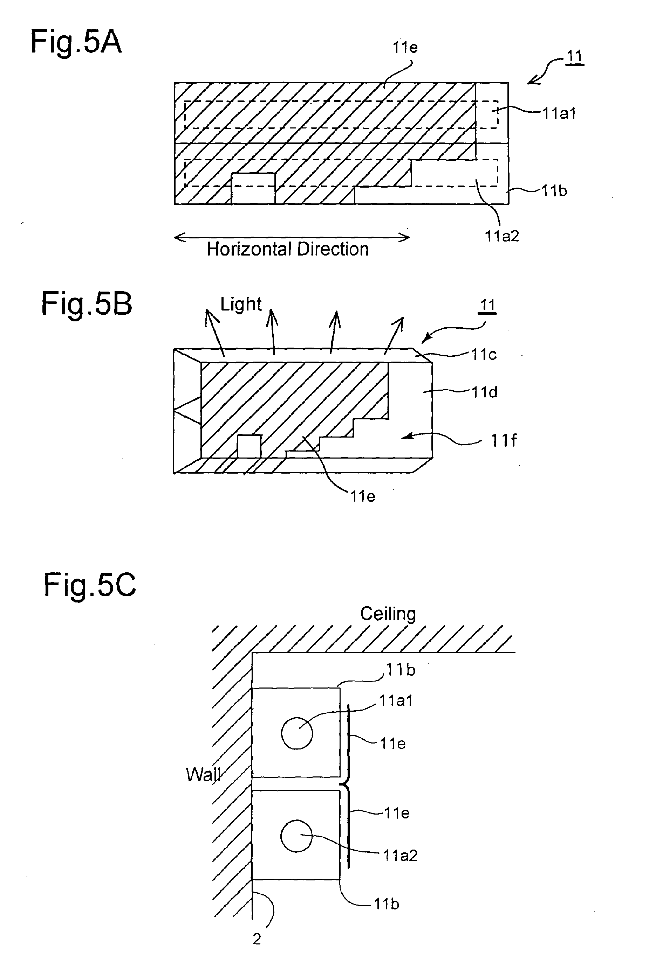

Figures 5A and 5B show a front view and a perspective view of the illumination device 11, respectively. The illumination device 11 includes two fluorescent lamps 11a1 and 11a2 (the number of fluorescent lamps may be one or more than two). A diffuser panel 11b such as a translucent white panel is provided on the illumination device 11. A light-shielding portion 11e is provided on a portion of the diffuser panel 11b so that the area of a light-emitting face 11c on the diffuser panel 11b on the upper side (the ceiling side) is larger than that of a light-emitting face 11d on the diffuser panel 11b. In this embodiment, no light-shielding portion is provided on the light-emitting face 11c on the upper side. Moreover, the light-shielding portion 11e is provided on the illumination device 11 in the width direction (horizontal direction) thereof so that the area of the light-emitting face 11d is asymmetric in the horizontal direction to provide a horizontally asymmetric illuminance distribution in the width direction in the photographic space 5a within the photographing room 5.

A light-shielding shape (a pattern formed by a light-transmitting area and a light-shielding area) of the light-shielding portion 11e is horizontally asymmetric. The pattern of the light-shielding portion 11e can have an alternative shape.

Figure 6A is a perspective view of the illumination device 12.

The illumination device 12 includes a fluorescent lamp 12a. Light rays from the fluorescent lamp 12a illuminate the lower part of the user (person to be photographed) 4 through a diffuser panel 12b constituting a light-emitting face 12f.

The illumination device 12 is provided on the lower front part of the photographing room 5. The light rays passing through the diffuser panel 12b from the illumination device 12 cause diffuse reflection on the walls of the photographing room 5 to indirectly illuminate the upper half of the user 4. Although no light-shielding portion is provided for the diffuser panel 12b, a light-shielding portion may also be provided as needed so that the intensity of irradiation of the light rays from the diffuser panel 12b becomes asymmetric.

Although the input device 9 is provided on the illumination device 12, the input device 9 can be provided on the partition panel 2.

Figure 6B is an illustrative view of the illumination device 12 according to another embodiment.

The illumination device 12 shown in Figure 6B has a light-shielding portion 12c provided on a surface thereof which faces the ceiling. A diffuser panel 12b is provided on a downward slanting light-emitting face 12f of the illumination device 12, and a light-shielding portion 12d is provided on a portion of the diffuser panel 12b. A fluorescent lamp or a flash lamp is used as a light source of the illumination device 12. With such a structure, the same effects as those of the illumination device 12 shown in Figure 6A are obtained.

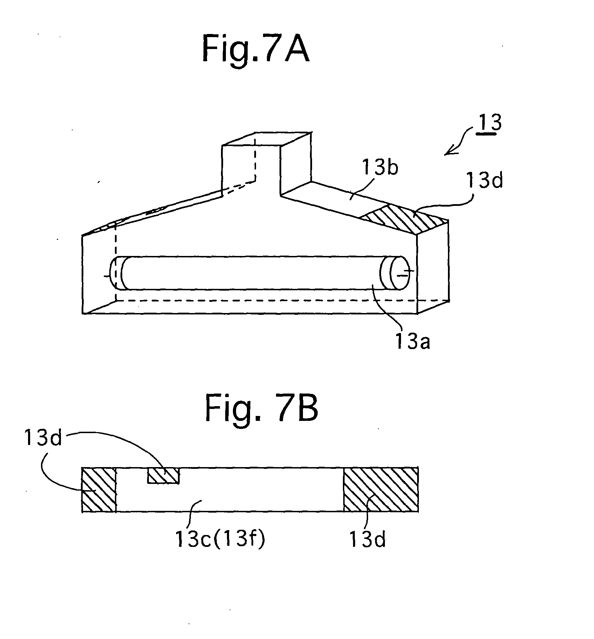

Figure 7A is a perspective view of the illumination device 13, and Figure7B is a plan view thereof.

The illumination device 13 includes a fluorescent lamp 13a. On an upper light-emitting face 13b, a diffuser panel 13c, and a light-shielding portion 13d are provided. The upper light-emitting face 13b of the illumination device 13 that is provided behind the user 4 is oriented upwards (toward the ceiling) so that the light rays are not directly incident on the user 4. The upwardly emitted light rays are emitted through the diffuser panel 13c. Moreover, the light-shielding portion 13d is provided so that a light-emitting face 13f allowing the light rays to be emitted in a horizontal direction is asymmetric to provide an asymmetric horizontal illuminance distribution within the photographic space 5a.

In the first embodiment, as shown in Figures 2 to 4, assuming that the height of the photographic space 5a within the photographing room 5 is H, the width is W, and the length is L, the dimensions of the photographic space 5a is defined as:
0.3 H ∼ 0.8 H
0.2 W ∼ 0.8 W
0.4 L ∼ 0.9 L

The positions, the emission of the light rays, light distribution characteristics, diffusion characteristics of the illumination devices 11 through 13 are set as described above so that the illuminance distribution in the photographic space 5a is within the range of an f-number of one-half through one-fifth (a single increase in f-number corresponds to one-half intensity); the illuminance distribution within the photographic space 5a being represented by an f-number.

Furthermore, in the width direction (W), the number of illumination devices, the positions thereof, the light distribution characteristics, the diffusion characteristics, and the like, are set so as to obtain a horizontally asymmetric illuminance distribution.

The walls of the photographing room 5 are coated with white paint so that the light rays from the illumination device diffuse reflect therefrom.

In this case, the walls can be diffusing surfaces having minute convex and concave portions coated with white paint. Instead of providing the light-shielding portions on the light-emitting faces of the illumination devices 11 through 13, each of the light-shielding portions can be alternatively provided between the fluorescent lamp and the light-emitting face or/and on the surface of a tube of the fluorescent lamp. In the case where the illumination conditions on the user 4 are changed by an input signal via the input device 9, the light-shielding portion can be provided so as to be displaceable by a driving device or the positions of the illumination device can be changed so that the relative position between the fluorescent lamp and the light-shielding portion provided on the light-emitting face is changed.

In the first embodiment, a 36 Watt elongated tube-shaped fluorescent lamp providing a color temperature of about 5000 ΥK is used for each of the illumination devices 11 through 13. The shielding material (light-shielding portions 11e, 12d, and 13d) can be attached on each respective light-emitting face (11f, 12f, and 13f) so that the relative position thereof with respect to each of the fluorescent lamps is invariable or variable.

The diffuser panels 11b, 12b and 13c are made of a material which has little influence on the color temperature of the illumination devices 11, 12 and 13, respectively.

In the case where the shielding material (light-shielding portions 11e, 12d, and 13d) is provided so as to be movable, the driving device therefore can be provided on the illumination device (11 through 13) accordingly. The shielding material is composed of light-transmitting portions and non light-transmitting portions alternately arranged at arbitrary intervals. By changing the position of the shielding portion with respect to the fluorescent lamp, a gradation is formed while controlling the intensity of light rays emitted from the fluorescent lamp to be incident on the user (person to be photographed) 4.

In the first embodiment, the diffuser panels 11b, 12b and 13c can be provided on the fluorescent lamps so as to be movable instead of, or in addition to, the shielding material. In this case, not only a single diffuser panel having a single light diffusing characteristic but also a combination of a plurality of diffuser panels having different light diffusing characteristics can be provided.

In order to adjust white balance of the light rays for illumination by the illumination device, a color temperature adjustment filter can be provided movably or fixedly on the fluorescent lamp.

A microcomputer is housed within the image-processing equipment 16 and is used for adjusting the arrangement of the illumination devices 11 through 13, the light-emitting conditions, and the image-processing steps in accordance with the photographing conditions and the illumination conditions inside the box (booth).

In order to illuminate the user (person to be photographed) with light rays having a horizontally asymmetric illumination distribution, the illumination device 11 provided on the upper portion of the box is positioned towards the upper right of the forward portion inside the box when viewed from the user 4.

The illumination devices 12 and 13 are provided on the lower center of the front wall and on the lower center of the back wall of the box, respectively. The arrangement of the illumination devices 11 through 13 may be arbitrarily determined as long as the user 4 can be asymmetrically illuminated. The illumination device may also be constructed so as to be movable or pivotable. The structures of the three illumination devices 11 through 13 can be the same or different from each other. The three illumination devices 11 through 13 can be constructed so that a illumination condition of light rays emitted from at least one illumination device is variable.

In order to obtain an ID photograph having a desired quality, the user 4 inputs information with reference to sample photographs (photograph data taken under various illumination conditions) via the input device 9 so that the control device changes the illumination conditions of the illumination devices 11 through 13 (for example, by the selection of fluorescent lamps to be illuminated or by changing the relative position between the fluorescent lamp and the shielding material (diffuser)).

Generally, if the user (person to be photographed) 4 is illuminated with symmetrical light having a large difference in light intensity on the incident positions (i.e., "hard" light rays) in the photographic space 5a within the photographing room 5, the resulting portrait photograph does not have good quality.

In view of this problem, in the first embodiment, the number and the arrangement of the illumination devices 11 through 13 and the diffuse states of the light rays emitted therefrom are appropriately set so as to create light rays having an asymmetric continuous gradation.

A fluorescent lamp, an artificial daylight lamp, a tungsten lamp, a speed light (hereinafter, referred to as a "flash lamp"), and the like, can be used as a light source for each of the illumination devices 11 through 13. Any of the above-mentioned light sources are capable of reproducing soft light having a continuous gradation, i.e., light at sunrise or immediately after sunrise in the morning, or immediately before sundown in the evening, known as "Golden Time" for producing photographic portraits, if the degree of diffusion from the light source device is adjusted.

In this case, a diffuse state of the light rays emitted from the light source or the arrangement of the illumination devices 11 through 13 in the photographic space 5a within the box are not required to be greatly changed.

In the first embodiment, the light from the illumination devices 11 through 13 is diffused on diffusing surfaces such as the ceiling or the walls in the photographic space 5a so that the ceiling and the walls serves as a plane light source as a whole. Diffuse reflection occurs within the photographic space 5a a plurality of times. The user (person to be photographed) 4 is illuminated with the light which is diffuse reflected a plurality number of times. In this embodiment, light having a gradation from a maximum illumination to a deep shadow is obtained by using a plane light source as a light source within the photographic space 5a rather than using a point light source.

A plurality of flash lamps 11a3 and 11a4 can be alternatively provided at a plurality of positions in the box. Light rays emitted from each of the flash lamps 11a3 and 11a4 may be controlled by the control device. As a method of converting the light rays emitted from the light source into soft light, strong light from the light source (having a large difference in light intensity with respect to an object to be irradiated) is diffused by a diffuser such as a diffuser panel or a shielding member covering the light source so that the light is converted not into direct light but into reflected indirect light, thereby creating soft light having a high degree of diffusion (having a small difference in light intensity with respect to an object to be irradiated). Thereafter, in order to obtain softer light, this procedure is repeated. When weak and soft light is obtained by the above procedure, a portion of light, which is unnecessary for creation of so-called "Golden Time" light, is eliminated. According to this embodiment, light having a high degree of diffusion represented as beautiful portrait light having a continuous gradation is produced.

In this embodiment, the illumination devices 11 through 13 are used in the box-type photographing apparatus so as to obtain a portrait photograph (ID photograph) of good quality.

As the light sources used for the illumination devices 11 through 13, the flash lamps 11a3 and 11a4 may also be used instead of the fluorescent lamps (11a1, 11a2, 12a and 13a) in the first embodiment. Some (or one) illumination devices may use a fluorescent lamp as the light source, whereas the other illumination device (s) may use a speed light (flash lamp) as the light source.

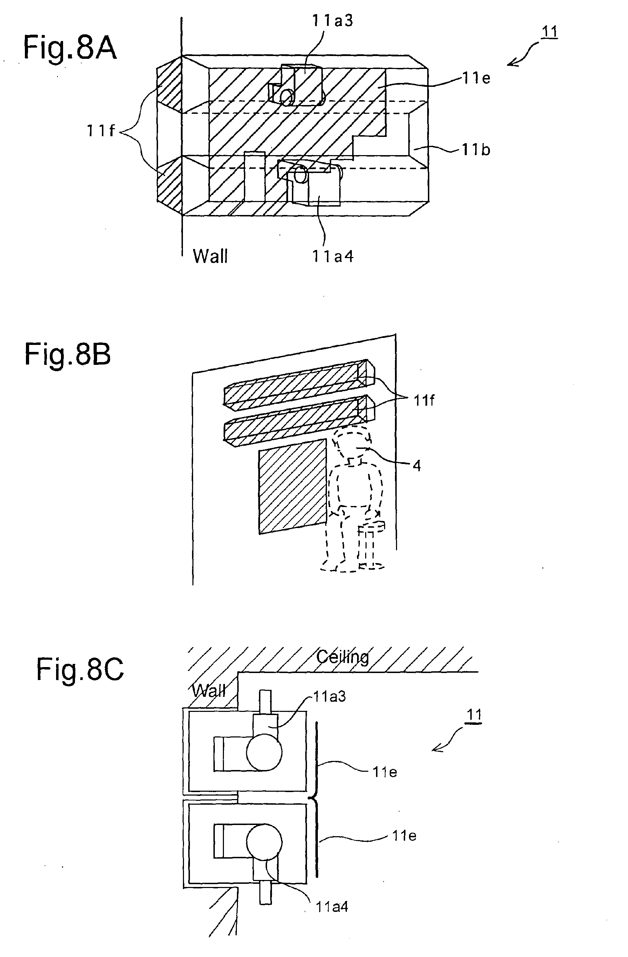

Figure 8A, 8B, and 8C are a perspective view, a back view, and a sectional view, respectively, of the illumination device 11 in the case where the flash lamps 11a3 and 11a4 are used as a light source thereof. The light-emitting faces of the flash lamps 11a3 and 11a4 are oriented toward the partition panel 2. The reference numeral 11b denotes a diffuser panel such as a translucent white panel, and the reference numeral 11e denotes a light-shielding portion such as a black light-shielding paper.

After light rays emitted from the light-emitting faces of the flash lamps 11a3 and 11a4 are diffuse reflected by a diffuser cover 11f, the light rays cause diffuse reflection again on the diffuser panel 11b on the user 4 side so as to illuminate the user (the person to be photographed) 4.

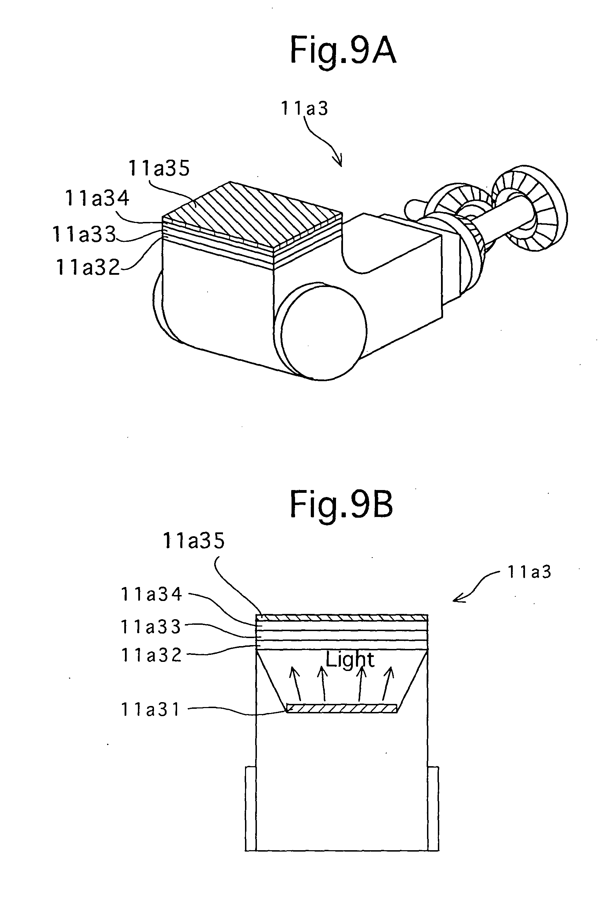

As shown in Figures 9A and 9B, the flash lamp 11a3 in this embodiment includes: a light source 11a31, one or more (in this embodiment two) diffuser panels (filters) 11a32 and 11a33 for diffusing light rays from the light source 11a31, an ND filter 11a34 for adjusting the light intensity of emitted light, and a film 11a35 provided on the ND filter 11a34. The flash lamp 11a4 has substantially the same structure as the flash lamp 11a3.

If the light intensity is insufficient, the ND filter 11a34 can be omitted. Moreover, a portion of the ND filter 11a34 can be shielded so as to change the light-emitting conditions thereof. A flash lamp provided for each of the illumination devices 11 through 13 may have a different number of diffuser panels or ND filters or a diffusion characteristic, or can all have the same structure.

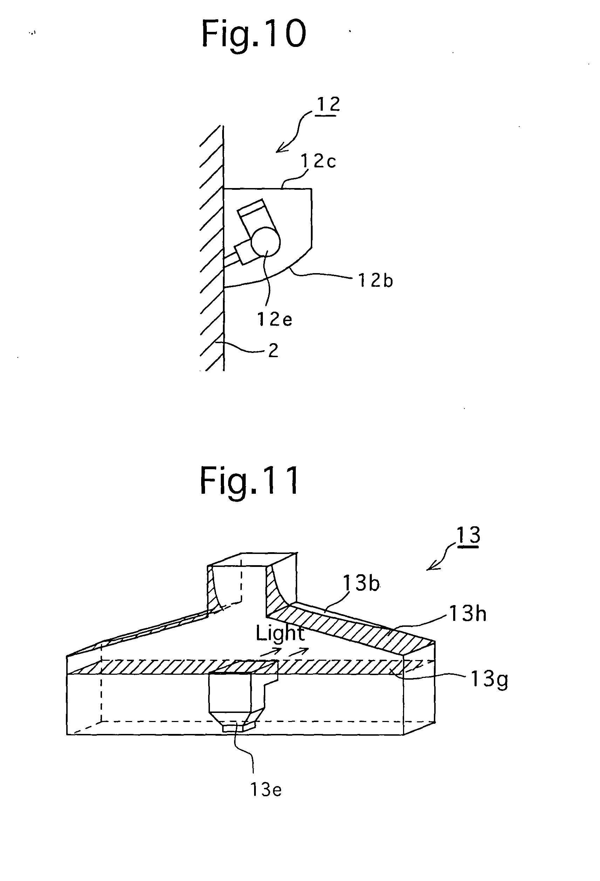

Figure 10 is a schematic view showing a the illumination device 12 when a flash lamp 12e is used as a light source instead of the fluorescent lamp 12a. The flash lamp 12e has substantially the same structure as the flash lamp 11a3 shown in Figures 9A and 9B. The illumination device 12 has a light-shielding portion 12c and a diffuser member 12b such as a translucent white glass fiber diffuser. After light rays emitted from the flash lamp 12e cause diffuse reflection on the light-shielding portion 12c, the light rays are diffuse-transmitted through the diffuser member 12b. Thereafter, a portion of the light rays is reflected by a floor 34 (see Figure 1), whereas the remaining light rays directly illuminate the user (the person to be photographed) 4.

Figure 11 shows the illumination device 13 when a flash lamp 13e is used as a light source instead of the fluorescent lamp 13a. The flash lamp 13e has substantially the same structure as the flash lamp 11a3 shown in Figures 9A and 9B. The illumination device 13 includes: a glass fiber diffuser 13g (translucent white glass fiber panel) serving as a diffuser member, and a light-shielding cover 13h. After light rays emitted from the flash lamp 13e are diffuse-transmitted through the diffuser member 13g, the light rays emit from the light-emitting face 13b toward the ceiling.

As described above, even if the flash lamps are used as the light sources of the illumination device in place of the fluorescent lamps, good illumination as described above can be achieved, a photograph of good image quality can be attained.

### (Embodiment 2)

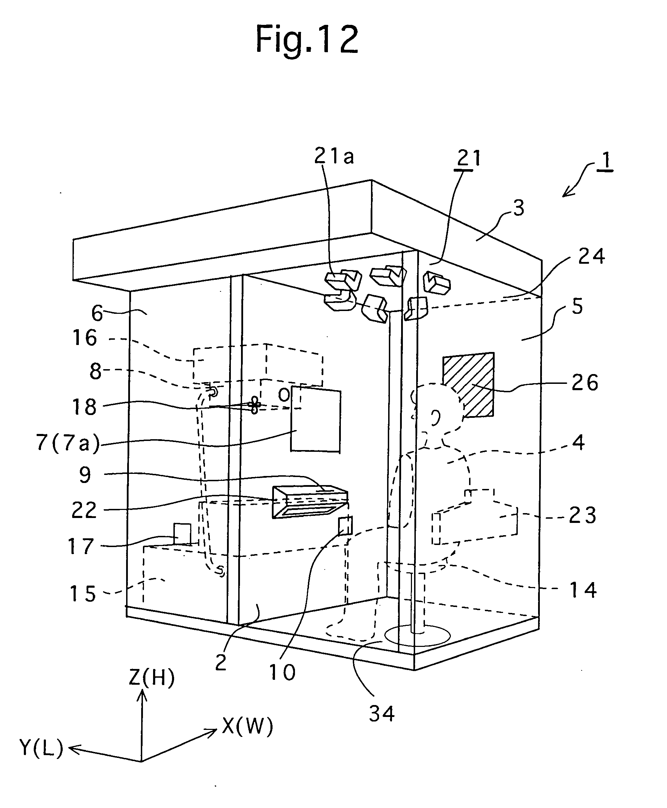

Figure 12 is a perspective view of a second embodiment of the photographing apparatus 1, according to the present invention. The second embodiment differs from the first embodiment in that a flash lamp 21a is used as a light source of each of a plurality of illumination devices 21 through 23, and the illumination device 21 is provided on the ceiling of the photographing room 5. The arrangement and structure of the other illumination devices 22 and 23 are substantially the same as the first embodiment. A point light source (a tungsten lamp or a small fluorescent lamp) can also be used instead of the flash lamp 21a. In this case, the degree of diffusion of light is suitably set at the same value.

The illumination device 21 includes: a plurality of flash lamps 21a (in Figure 12, six flash lamps 21a; however, the number of flash lamps 21a may be two or more), and a diffuser panel (translucent white glass fiber diffuser) 24.

The plurality of flash lamps 21a are arranged so that light-emitting directions thereof are directed in different directions. For example, at least one of the flash lamps 21a is arranged so that its light-emitting face is oriented toward the ceiling, whereas other flash lamp or lamps are arranged so that the light-emitting face is oriented toward the partition panel 2. The plurality of flash lamps 21a are arranged so that the light-emitting directions are asymmetric in a horizontal direction. At least one of the plurality of flash lamps 21a is arranged so that the light-emitting face is oriented toward the ceiling. Diffuse light emitted from the plurality of flash lamps 21a to pass through the diffuser panel 24 and diffuse light reflected by the ceiling (acting as a diffusing surface or being coated) to thereafter pass through the diffuser panel 24 constitute light rays from the illumination device 21 for illuminating the user (person to be photographed) 4.

Instead of the plurality of flash lamps 21a, a plurality of fluorescent lamps may be used as the light sources of the illumination device 21. In this case, it is suitable that some of the plurality of fluorescent lamps are arranged so that the light-emitting face is oriented toward the partition panel 2 and the other fluorescent lamps are arranged so that the light-emitting face is oriented toward the ceiling.

Each of illumination device 22 and 23 includes at least one flash lamp and a diffuser panel. A light-shielding portion similar to that in the first embodiment is provided on the diffuser panel on the light-emitting face side as needed. The structures of the illumination device 22 and 23 are approximately the same as those of Figures 6 and 7 described in the first embodiment.

In the second embodiment, the light-emitting states of the plurality of flash lamps 21a, for example, the number of flash lamps to emit light and/or the light-emitting directions thereof, are controlled based on input information through the input device so that the illumination conditions on the user are variable.

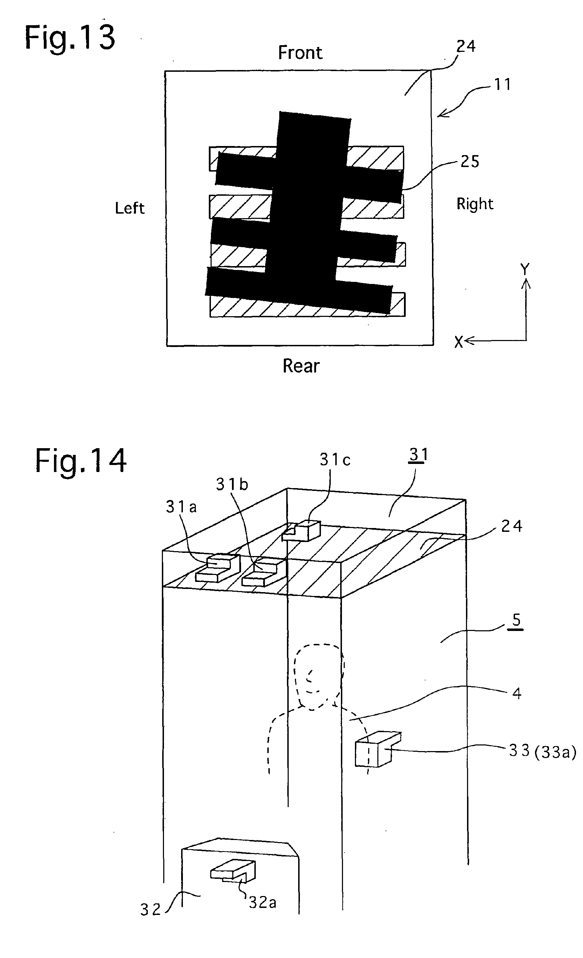

In the second embodiment, the diffuser panel 24 provided on the ceiling is partially covered with a light-shielding member 25, such as black light-shielding paper, as shown in Figure 13, so that diffuse light from the diffuser panel 24 does not directly illuminate the user (person to be photographed) 4. As a result, the user (person to photographed) 4 is illuminated with soft light, which allows a photograph of further improved image quality to be obtained.

Instead of the flash lamps 21a, similar fluorescent lamps to those in the first embodiment can be used as the light sources of the illumination device 22 and 23.

Moreover, as the light source of the illumination device 21 provided on the ceiling, a combination of a fluorescent lamp and a flash lamp can be alternatively used.

If a 30 to 40 cm square sized light-shielding portion 26 is provided on a side wall of the photographing room 5 (see Figure 12), the illumination light on the user (person to be photographed) 4 becomes softer to obtain a photograph of good image quality.

According to the above-described structure, an illuminance distribution in the photographic space 5a in the second embodiment is substantially the same as that in the first embodiment. As a result, the same effects as those in the first embodiment are obtained. The illuminance distribution within the photographic space 5a can be made horizontally asymmetric and the illuminance can be made higher in the upper portion (the ceiling side) than in the lower part (on the floor 34). Accordingly, an image of much higher quality can be obtained.

Alternatively, a light-opening or a light-reflective member can be provided for the illumination device 23 to radiate the illumination light toward (in a forward direction) the back of the user (person to be photographed) 4 so that a portion of light rays emitted from the illumination device 23 directly illuminates the shoulders of the user (person to be photographed) 4. Such a structure is desirable because a photographed image can provide a three-dimensional effect.

### (Embodiment 3)

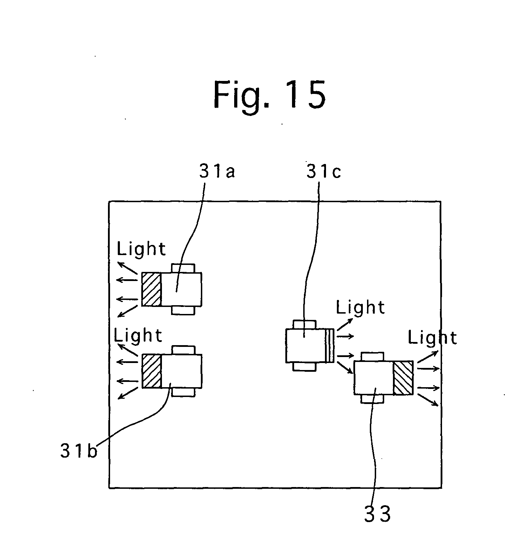

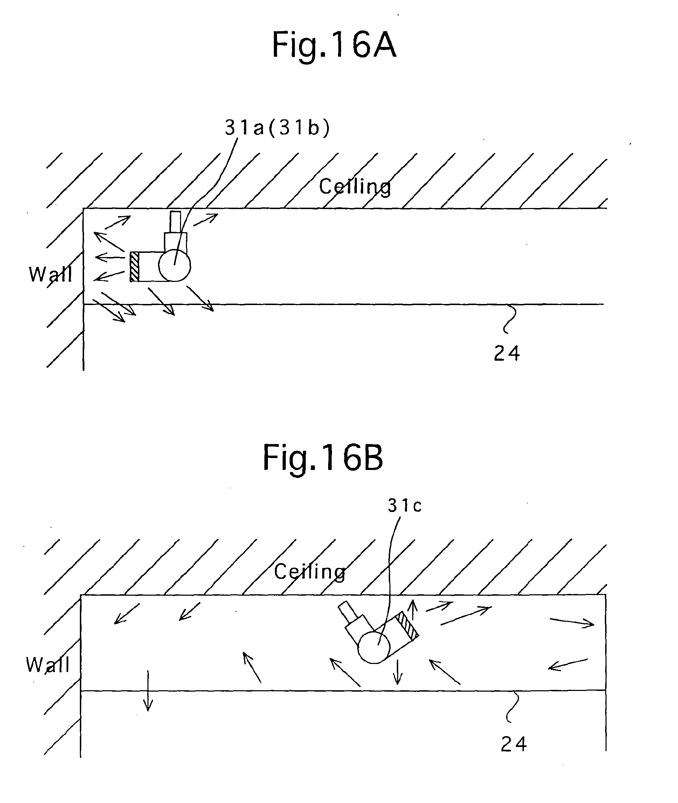

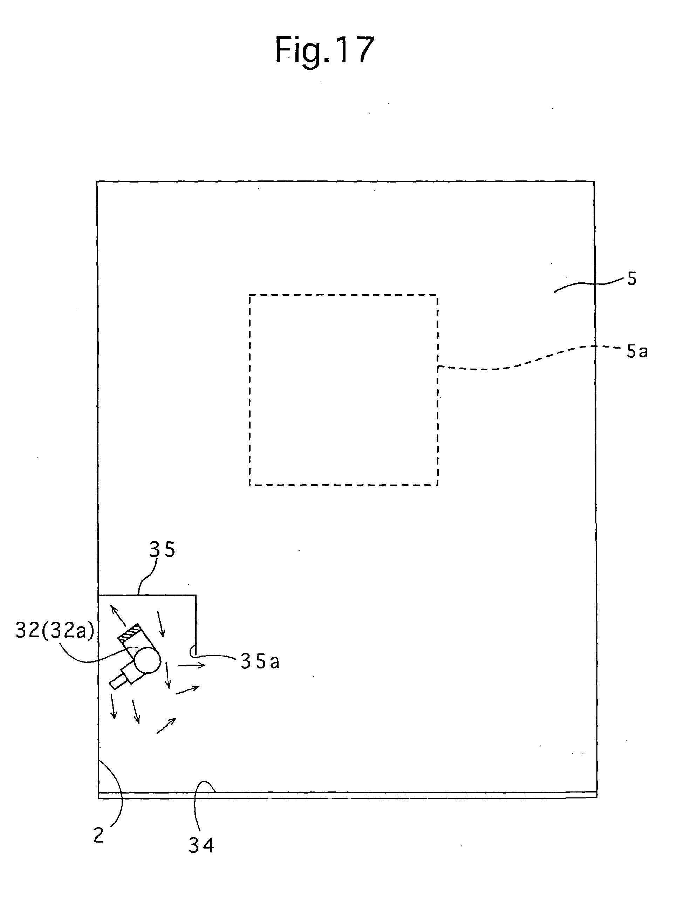

Figure 14 is a perspective view of a portion of the photographing room 5 according to the third embodiment of the present invention. Figure 15 is a plan view of Figure 14, Figures 16A and 16B are illustrative views of an upper portion of Figure 14, and Figure 17 shows an illustrative side view of the photographing room 5.

The third embodiment differs from the second embodiment in that flash lamps 31a, 31b, 31c, 32a and 33a are used as light sources of illumination devices 31 through 33. In the third embodiment, the illumination conditions are varied according to an input signal from the input device. Three flash lamps 31a, 31b and 31c are provided on the ceiling of the photographing room 5. The illumination device 31 includes: a plurality of flash lamps (although three flash lamps 31a to 31c are used in Figure 14, the number of flash lamps may be any number equal to or larger than 2), and the diffuser panel (translucent white glass fiber diffuser) 24. In the third embodiment, the illumination device 31 includes the flash lamps 31a, 31b and 31c, as shown in Figures 14 to 16B. The flash lamp 31c is arranged so that its light-emitting face is oriented toward the ceiling while the other two flash lamps 31a and 31b are arranged so that their light-emitting faces are oriented toward the partition panel (partition wall) 2.

The two flash lamps 31a and 31b are arranged so that their light-emitting directions differ from each other. Furthermore, the flash lamps 31a and 31b are arranged so as to be horizontally asymmetric. The flash lamp 31c is arranged so that the light-emitting face thereof is oriented toward the ceiling. Diffuse light emitted from the flash lamps 31a and 31b to be reflected by the walls so as to pass through the diffuser panel 24 and diffuse light emitted from the flash lamp 31c to be reflected by the ceiling (acting as a diffusing surface or a coated surface) so as to pass through the diffuser panel 24 act as light rays for illuminating the user (person to be photographed) 4.

Each of the illumination device 32 and 33 has at least one flash lamp, and a diffuser panel. A light-shielding portion similar to that in the first embodiment can be provided on a light-emitting face of the diffuser panel as needed.

Figure 17 shows a diffuse state of light rays which are emitted from the illumination device 32 to illuminate in a direction toward a floor 34 and subsequently illuminate a person to be photographed (not shown). An inner wall 35a of a shielding plate 35 is coated so as to act as a reflective surface or a diffuse-reflective surface. The shielding plate 35 prevents the light rays from the flash lamp 32a from directly entering the photographic space 5a in which the upper half body of the user (person to be photographed) 4 is situated.

In the third embodiment, after the light rays emitted from the flash lamp 32a are reflected by the partition panel 2 or the shielding plate 35 to be reflected again by the floor 34, the light rays illuminate the user (person to be photographed) 4 from below. The light-emitting face of the flash lamp 33a of the illumination device (wall side-oriented backlight) 33 is oriented toward the wall so as to be opposite to the user 4.

In the third embodiment, the light-emitting states of the plurality of flash lamps, for example, the number of flash lamps to emit light and/or the light-emitting directions thereof, are controlled based on input information via the input device 9 so that the illumination conditions on the user 4 are variable. For example, for normal photography, the flash lamps 31a, 31b and 31c of the illumination device 31 and the flash lamp 33a of the illumination device 33 are made to flash. If the user (person to be photographed) 4 is plump (or overweight), the flash lamps 31a and 31c of the illumination device 31 and the flash lamp of the illumination device 33 are made to flash. As a result, the user (person being photographed) 4 can be photographed so as to look less plump. Conversely, if the user (person to be photographed) 4 is rather thin (underweight), all the flash lamps of the illumination device 31 through 33 are made to flash. As a result, the user (person being photographed) 4 can be photographed so as to look less thin.

According to the above-described structure of the third embodiment, an illuminance distribution within the photographic space 5a is similar to that in the first embodiment. As a result, the same effects as those in the first embodiment are obtained.

### (Embodiment 4)

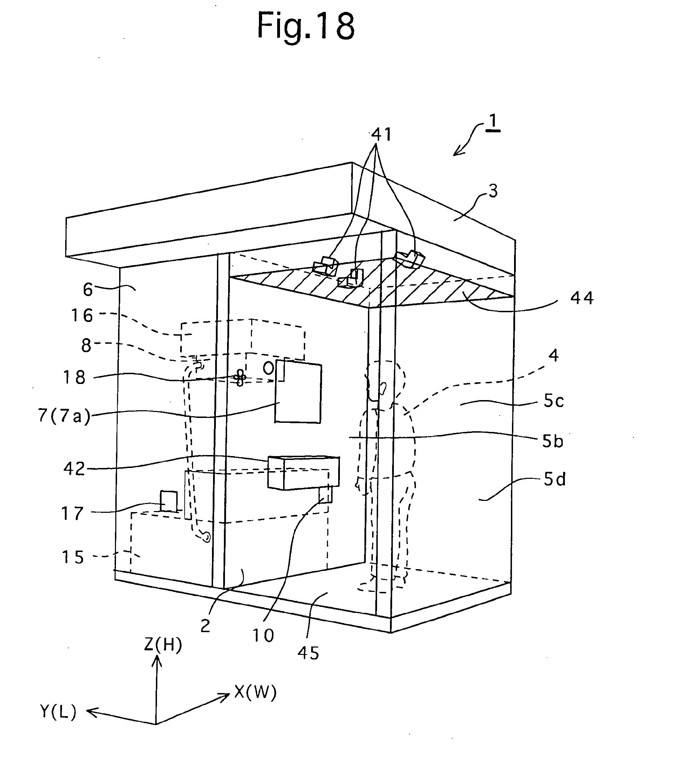

Figure 18 is a schematic view of the fourth embodiment of the photographing apparatus 1, according to the present invention. The fourth embodiment is related to the photographing room 5, and in particular, relates to the so-called Print Club (instant photo machine which produces photographs as tiny stickers). In Figure 18, illumination devices 41 and 42 are provided, and have the same structures as those of the illumination device 31 and 32 shown in Figure 14. A translucent white glass fiber diffuser (diffuser panel) 44 is provided on the ceiling.

The fourth embodiment differs from the third embodiment shown in Figure 14 in that the illumination device for backlight is omitted.

Each of side faces 5b and 5c and a back face 5d of the photographing room 5 has a diffusing surface, or an openable/closable wall member coated with white paint, a white curtain, a white polyvinyl sheet, or the like.

A floor 45 is coated with a white paint or acts as a diffusing surface so as to reflect diffuse light from illumination device (footlight) 42 to efficiently light the user (person to be photographed) 4.

According to the fourth embodiment, a high-level portrait illumination technique as described is employed. In addition, the combination of a photographic light source, a photographic lens, and an image recording medium is appropriately set. As a result, light having a continuous gradation is produced within the box to obtain a portrait photograph of good image quality. In particular, a photograph similar to that photographed with light having the same light quality as that of light at so-called "Golden Time" is obtained.

In each of the embodiments described above, a video camera can be used as the photographing device so as to obtain a motion image instead of a still image.

Moreover, in each of the embodiments described above, a subject other than a person may be placed in the region where the face of the user 4 is otherwise positioned. As a result, a high-quality photograph of a subject as a portrait photograph can be obtained.

### (Embodiment 5)

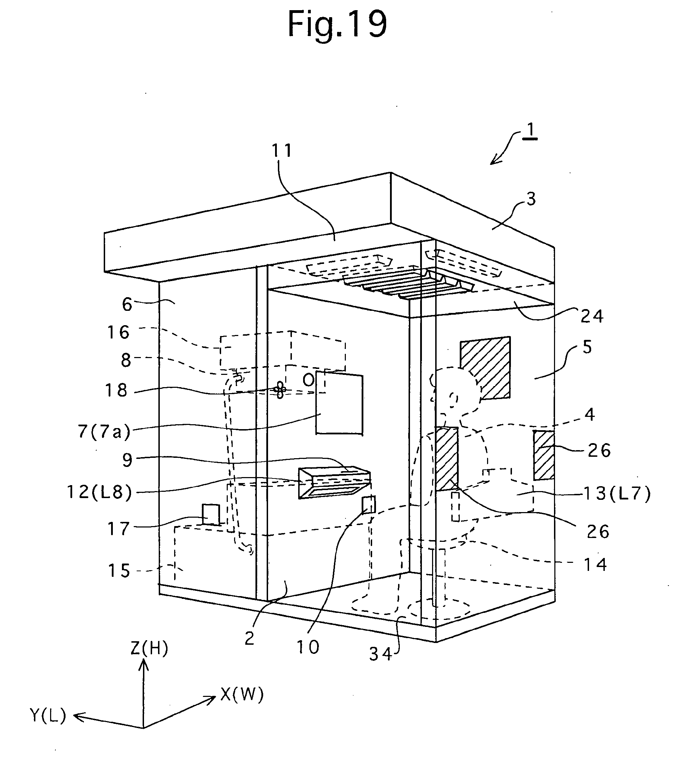

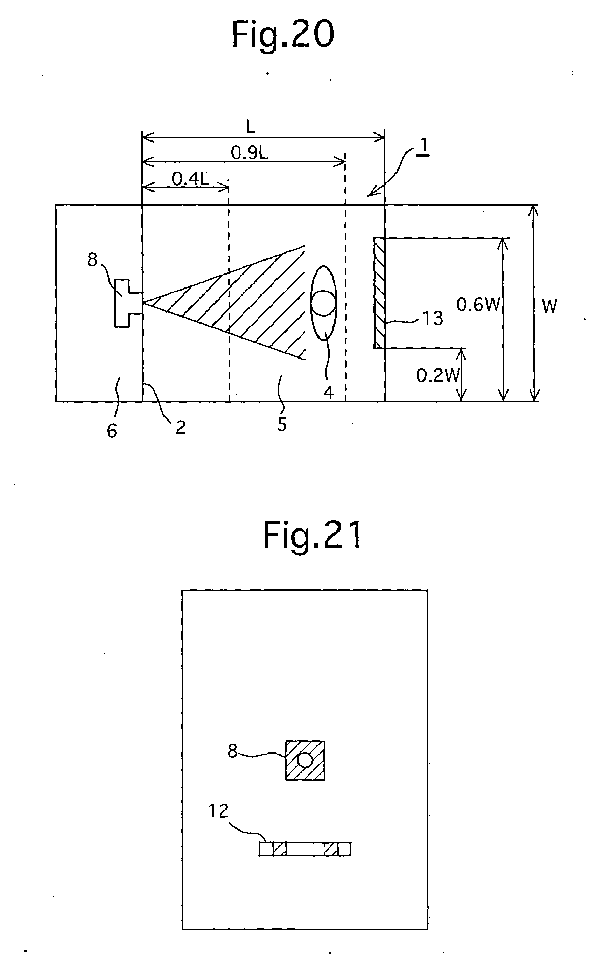

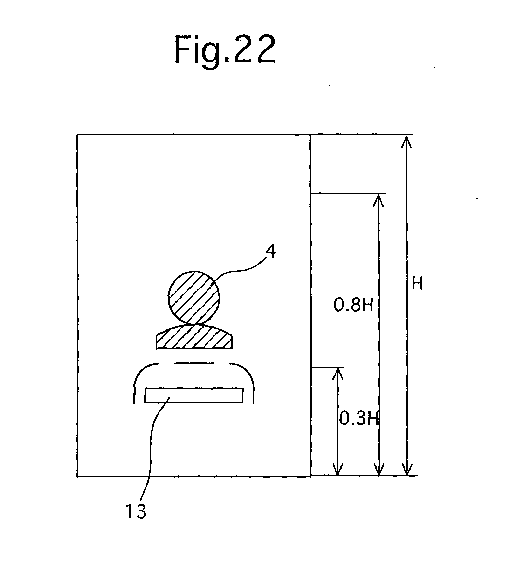

Figure 19 is a perspective view of a fifth embodiment of a photographing apparatus 1, according to the present invention. Figure 20 is a plan view of photographing apparatus 1 according to the present invention. Figures 21 to 25 are illustrative views, each showing a portion of the photographing apparatus 1 shown in of Figure 1.

The principal structure of the fifth embodiment is the same as that of the first embodiment. Therefore, the same components as those in the first embodiment are denoted by the same reference numerals.

The photographing apparatus 1 is used for producing an ID photograph, a still-life photograph, a product (goods) photograph, and the like. The photographing apparatus 1 has a substantially box-like shape.

The photographing apparatus 1 is provided with a partition panel 2 for dividing the box-like space 3 of the photographing apparatus 1 into two spaces, i.e., the photographing room 5 and the equipment storage room 6. The user (person to be photographed) 4 is positioned in the photographing room 5, whereas the photographing device 8 such as a digital still camera or a video camera, and the image-processing equipment 16, or the like, are stored in the equipment storage room 6.

A photographic window 7 is provided in the partition panel 2. A half mirror 7a is provided in the photographic window 7. The photographing device (camera) 8 photographs the upper half of the front body of the user 4 through the half mirror 7a of the photographic window 7. In addition, the user 4 can observe various information through the half mirror 7a.

Illumination devices 11 through 13 are provided on the ceiling, in the lower center of the partition panel 2, and in the center of the back of the photographing room 5 where the user 4 is positioned, respectively, so as to illuminate the user (the person to be photographed) 4. The detailed structures of the illumination devices 11 through 13 are described below.

A display device 9a is provided on the partition panel 2 and/or the illumination device 12 so as to display a plurality of photograph data taken under various illumination conditions as samples.

An input device 9, for photographic operations, which is provided on an upper face of the illumination device 12. The user 4 inputs data via the input device 9 for obtaining a photograph meeting his (her) objectives/preferences with reference to the photograph data displayed on the display device 9a.

The reference numeral 10 denotes the coin/bill slot.

The reference numeral 14 denotes the stool on which the user 4 sits. The user 4 leans against a backrest (not shown) to directly view the photographic window 7. A light-shielding portion 26 is provided on a side of a back face of the photographing room 5 so as to achieve soft light for illuminating the user 4.

The photographing device 8 includes a single focal length lens or a zoom lens, which forms an image of the user (person to be photographed) 4 by an imaging sensor (CCD) to be converted into an image signal (image information) to be recorded on a recording medium (such as a hard disk).

An image signal from the imaging sensor is input to the image-processing equipment 16.

The image-processing equipment 16 processes the image signal (electric signal) which is output from the imaging sensor.

A personal computer (control device) 15 controls various operations of the photographing apparatus 1.

The control device changes illumination conditions in the photographing room 5 with the illumination devices 11 through 13, based on the input signal from the input device 9.

A fan 18 is provided in the equipment storage room 6 for ventilating the equipment storage room 6.

During image processing, in the case of a color photograph, for example, the image information obtained by the photographing device 8 is converted into three primary colors, i.e., C (cyan), M (magenta) and Y (yellow). Subsequently, a color image is formed based on the color data obtained by the color conversion.

Subsequently, the color image information is printed by a printing device which outputs a photograph through a photograph slot 17.

Although the three illumination devices 11 through 13 are used in the photographing room 5 to illuminate the user 4 in this embodiment, the number of illumination devices can be two or more.

Diffuse light from the illumination devices 11 through 13 are incident on the walls and the ceiling of the photographing room 5, so that the walls and the ceiling in turn serve as plane light sources to illuminate the user 4 with diffuse light therefrom.

The user 4 is illuminated with asymmetric soft light rays having a continuous gradation from the illumination devices 11 through 13. Alternatively, the user 4 may be asymmetrically illuminated in accordance with an input signal from the input device 9.

The illumination light in the fifth embodiment is set so that a gradation from a highlight (a region having a high light intensity) to a shadow (a region having a low light intensity) within a photographic space 5a, in which the user 4 is positioned, varies from an f-number of one-tenth to one-half or less, based on simulation or experiments with a computer (not shown). More specifically, a difference in exposure is set so as to be one-half or less at the maximum.

Such image information of the user (person to be photographed) 4 photographed under the illumination light is subjected to gradation curve, density, and color balance adjustment and sharpness adjustment in during photographic processing (image-processing) which is carried out by the image-processing equipment 16.

For convenience, as shown in Figures 19 to 22, the directions inside the photographing room 5 are referred to as a width direction (X direction; W), a length direction (Y direction; L) and a height direction (Z direction; H), respectively, with respect to the position of the user 4 as the center.

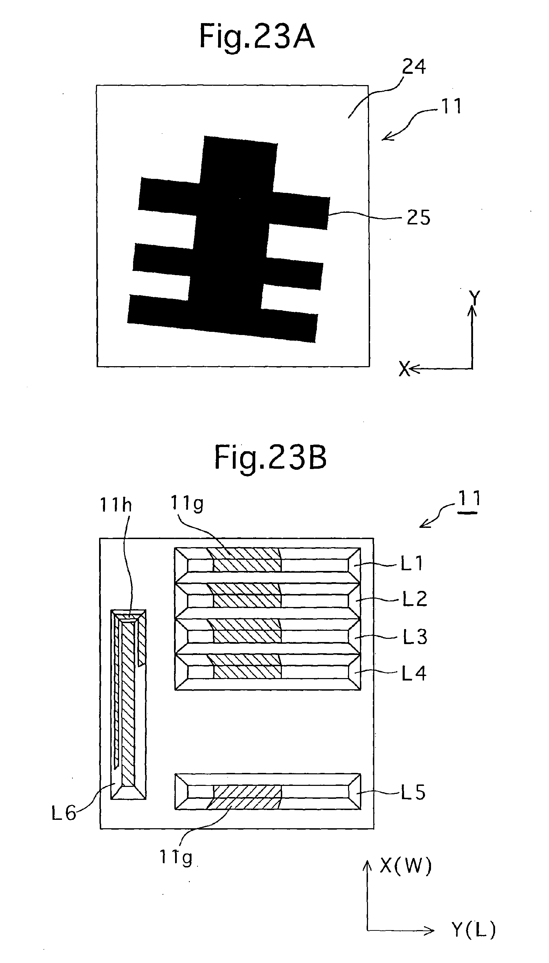

Figures 23A and 23B are illustrative views of the illumination device 11 provided on the ceiling shown in Figure 19.

The illumination device 11 includes, as shown in Figure 23B, horizontally arranged five fluorescent lamps L1 through L5, and a fluorescent lamp L6 arranged at the back portion of the photographing room 5 in the length direction.

A space between the fluorescent lamps L1 to L6 and the user 4 is partitioned by the diffuser panel (translucent white glass fiber diffuser) 24.

The light-shielding member 25 for reducing the amount of light rays from the fluorescent lamps directly incident on the user 4 is provided on the diffuser panel 24 in an integral or independent manner.

The fluorescent lamp L5 of the six fluorescent lamps L1 to L6 constituting the illumination device 11 is provided in the vicinity of an entrance of the photographing room 5. The fluorescent lamps L1 to L4 are arranged at approximately equal intervals and are provided separate from the fluorescent lamp L5.

In this embodiment, the number of the fluorescent lamps may be 2 or more. A light-shielding portion 11a is provided on a light-emitting face (made of a diffusing surface or a non-diffusing surface) of each of the fluorescent lamps L1 to L5 so as to be asymmetric in the length direction (L direction).

Although a pattern of the light-shielding portion 11a provided for each of the fluorescent lamps L1 to L5 and the position of each of the light-shielding portions 11a are the same for all the fluorescent lamps, they may be different for each of the fluorescent lamps.

A light-shielding portion 11b is also provided on a light-emitting face of the fluorescent lamp L6 so as to be asymmetric in the horizontal direction (W direction).

The pattern of the light-shielding member 25 is asymmetric in at least one of the horizontal direction (W direction) and the length direction (L direction).

The pattern of the light-shielding member 25 is determined by computer simulation or experimentally.

With such a structure, the amount of light, which is emitted from the fluorescent lamps L1 to L6 through the diffuser panel 24 so as to be directly incident on the user (person to be photographed) 4 is reduced, so that soft light is incident on the user 4. The light-shielding portions 11a and 11b and the light-shielding member 25 are not limited to those which perfectly shield light. For example, light-shielding portions and a light-shielding member having a transmittance within the range of 0 to 50% (desirably, 0 to 70%) can be used.

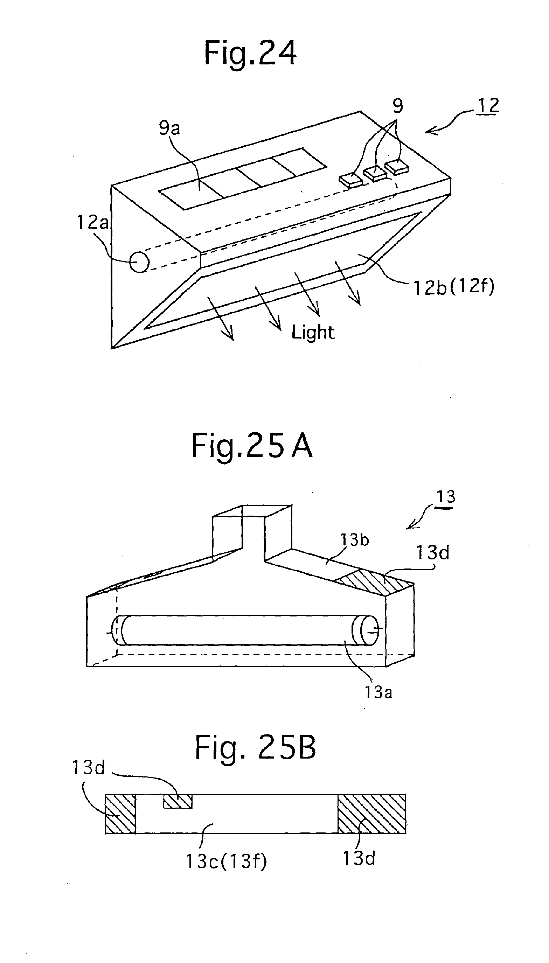

Figure 24 is a perspective view of the illumination device 12.

The illumination device 12 includes a fluorescent lamp 12a (may alternatively include two or more fluorescent lamps). Light rays from the fluorescent lamp 12a pass through a diffuser panel 12b provided on a light-emitting face 12f to illuminate the lower part of the user 4.

The illumination device 12 is provided on the lower part of the front of the photographing room 5. Light rays from the illumination device 12 passing through the diffuser panel 12b cause diffuse reflection on the walls of the photographing room 5 so as to indirectly illuminate the upper half body of the user 4. Although no light-shielding portion is provided for the diffuser panel 12b, a light-shielding portion may be provided as needed so that the irradiation intensity of the light rays from the diffuser panel 12b becomes asymmetric.

Although the input device 9 is provided on the illumination device 12, the input device 9 can be provided on the partition panel 2.

Figure 25A is a perspective view of the illumination device 13, and Figure25B is a plan view thereof.

The illumination device 13 includes the fluorescent lamp 13a (may alternatively include two or more fluorescent lamps). On the upper light-emitting face 13b, the diffuser panel 13c and a light-shielding portion 13d are provided. The upper light-emitting face 13b of the illumination device 13 that is provided behind the user 4 is oriented upwards (toward the ceiling) so that the light rays are not directly incident on the user 4.

The upwardly emitted light rays are emitted through the diffuser panel 13c. Moreover, the light-shielding portion 13d is provided so that a light-emitting face 13f allowing the light rays to be emitted in a horizontal direction is asymmetric to provide an asymmetric horizontal illuminance distribution within the photographic space 5a.

In the first embodiment, as shown in Figures 20 to 22, assuming that the height of the photographic space 5a within the photographing room 5 is H, the width is W, and the length is L, the dimensions of the photographic space 5a is defined as:
0.3 H ∼ 0.8 H
0.2 W ∼ 0.8 W
0.4 L ∼ 0.9

The positions, the emission of the light rays, light distribution characteristics, diffusion characteristics of the illumination devices 11 through 13 are set as described above so that the illuminance distribution in the photographic space 5a is within the range of an f-number of one-half through one-tenth (a single increase in f-number corresponds to one-half intensity); the illuminance distribution within the photographic space 5a is represented by an f-number.

Furthermore, in the width direction (W), the number of the illumination device, the positions thereof, the light distribution characteristics, the diffusion characteristics, and the like, are set so as to obtain a horizontally symmetric or asymmetric illuminance distribution.

The walls of the photographing room 5 are coated with white paint so that the light rays from the illumination device diffuse reflect therefrom.

In this case, the walls can be diffusing surfaces having minute convex and concave portions coated with white paint. Instead of providing the light-shielding portions on the light-emitting faces of the illumination devices 11 through 13, each of the light-shielding portions can be alternatively provided between the fluorescent lamp and the light-emitting face or/and on the surface of a tube of the fluorescent lamp. In the case where the illumination conditions on the user 4 are changed by an input signal via the input device 9, the light-shielding portion can be provided so as to be displaceable by a driving device or the positions of the illumination device can be changed so that the relative position between the fluorescent lamp and the light-shielding portion provided on the light-emitting face is changed.

In the fifth embodiment, a 36 Watt elongated tube-shaped fluorescent lamp providing a color temperature of about 5000 Υk is used for each of the illumination devices 11 through 13. The shielding material (light-shielding portions 11g, 11h, and 13d) can be attached on each respective light-emitting face so that the relative positions thereof with respect to each of the fluorescent lamps is invariable or variable.

The diffuser panels (diffuser) are made of a material which has little influence on the color temperature of the illumination devices 11 through 13.

In the case where the shielding material (light-shielding portions 11g, 11h, and 13) is provided so as to be movable, the driving device there can be provided on the illumination device (11 through 13). The shielding material is composed of light-transmitting portions and non light-transmitting portions alternatively arranged at arbitrary intervals. By changing the position of the shielding portion with respect to the fluorescent lamp, the intensity of light emitted from the fluorescent lamps is controlled to be incident on the user (person to be photographed) 4, thereby controlling a gradation of the resultant photograph.

In the fifth embodiment, a diffuser panels ca be provided on the fluorescent lamps so as to be movable instead of, or in addition, to the shielding material. In this case, not only a single diffuser panel having a single light diffusing characteristic but also a combination of a plurality of diffuser panels having different light diffusing characteristics can be provided.

In order to adjust white balance of the light rays for illumination by the illumination device, a color temperature adjustment filter can be provided movably or fixedly on the fluorescent lamp.

A microcomputer is housed within the image-processing equipment 16 and is used for adjusting the arrangement of the illumination devices 11 through 13, the light-emitting conditions, and the image-processing steps in accordance with the photographing conditions and the illumination conditions inside the box (booth).

In order to illuminate the user (person to be photographed) 4 with the light rays having a horizontally asymmetric illumination distribution, the respective fluorescent lamps L1 through L6 of the illumination device 11 provided on the ceiling of the box are arranged asymmetric in the horizontal direction (W) and the length direction (L).

The illumination device 12 and 13 are provided on the lower center of the front wall and on the lower center of the back wall of the box, respectively. The arrangement of the illumination devices 11 through 13 may be arbitrarily determined as long as the user 4 can be asymmetrically illuminated. The illumination device may also be constructed so as to be movable or pivotable. The fluorescent lamps of the three illumination devices 11 through 13 may be the same or different from each other. The three illumination devices 11 through 13 can be constructed so that a illumination condition of light rays emitted from at least one illumination device is variable. Moreover, only the illumination device 11 is provided as illumination device placed in the box.

In order to obtain an ID photograph having a desired quality, the user 4 inputs information with reference to sample photographs (photograph data taken under various illumination conditions) via the input device 9 so that the control device changes the illumination conditions of the illumination devices 11 through 13 (for example, by the selection of fluorescent lamps to be illuminated or by changing the relative position between the fluorescent lamp and the shielding material) .

Generally, if the user (person to be photographed) 4 is illuminated with light having a large difference in light intensity on the incident positions (i.e., "hard" light rays) in the photographic space 5a within the photographing room 5, the resulting portrait photograph does not have good quality.

In view of this problem, in the fifth embodiment, the number and the arrangement of the illumination devices 11 through 13 and the diffuse states of the light rays emitted therefrom are appropriately set so as to create light rays having an asymmetric continuous gradation.

A fluorescent lamp, an artificial daylight lamp, a tungsten lamp, a speed light (hereinafter, also referred to as a "flash lamp"), and the like, can be used as a light source for each of the illumination devices 11 through 13. Any of the above-mentioned light sources are capable of reproducing soft light having a continuous gradation, i.e., light at sunrise or immediately after sunrise in the morning, or immediately before sundown in the evening, known as "Golden Time" for producing photographic portraits, if the degree of diffusion from the light source device is adjusted.

In this case, a diffuse state of the light rays emitted from the light source or the arrangement of the illumination devices 11 through 13 in the photographic space 5a within the box are not required to be greatly changed.

In the fifth embodiment, the light from the illumination devices 11 through 13 is diffused on the diffuser panel 24 on the ceiling or the diffusing surfaces such as the walls in the photographic space 5a so that the ceiling and the walls serves as a plane light source as a whole. Diffuse reflection occurs within the photographic space 5a for a plurality of times. The user (person to be photographed) 4 is illuminated with the light which is diffuse reflected a plurality number of times. In this embodiment, light having a gradation from a maximum illumination to a deep shadow is obtained by using a plane light source as a light source within the photographic space 5a rather than using a point light source.

A plurality of flash lamps 11a3 and 11a4 can be alternatively provided at a plurality of positions in the box. Light rays emitted from each of the flash lamps 11a3 and 11a4 may be controlled by the control device. As a method of converting the light rays emitted from the light source into soft light, strong light from the light source (having a large difference in light intensity with respect to an object to be irradiated) is diffused by a diffuser plate such as a diffuser panel or a shielding member covering the light source so that the light is converted not into direct light but into reflected indirect light, thereby creating soft light having a high degree of diffusion (having a small difference in light intensity with respect to an object to be irradiated). Thereafter, in order to obtain softer light, this procedure is repeated. When weak and soft light is obtained by the above procedure, a portion of light, which is unnecessary for creation of so-called "Golden Time" light, is eliminated. According to this embodiment, light having a high degree of diffusion represented as beautiful portrait light having a continuous gradation is produced.

In this embodiment, the illumination devices 11 through 13 are used in the box-type photographing apparatus so as to obtain a portrait photograph (ID photograph) of good quality.

In this embodiment, in portrait photography, beautiful light before sundown at so-called "Golden Time" and soft natural light are reproduced in a small limited space within the photographing room 5 as described above. A person to be photographed is free to choose any light, for example, light allowing the photographed person to look slimmer, light allowing the person to look paler, or light allowing the person to look larger, which are obtained by slightly changing the light balance by inputting an input signal via the input device 9.

According to the fifth embodiment, the following effects are obtained: a clear photograph of the face of the photographed person (user) 4 is obtained; even if the photographed person (user) 4 wears a pair of glasses, the glasses do not cause reflections; an artificial effect of the illumination light is eliminated; and the resulting photograph has a beautiful gradation.

More specifically, in the fifth embodiment, five illumination states having the following characteristics are used to photograph the user (person being photographed) 4.

**[Table 1]**

| Illumination state | Suitability |
|---|---|
| (A) Light having a strong shadowing effect | Plump, Round-faced, Young-looking Pale and Flat-faced |
| (B) Light for shadowing the chin | Pale and full-faced, Oval-faced |
| (C) Standard light | High Suitability for most People |
| (D) Flat light without any highlight | People with Sculpted Features, Bald, Elder Women, Thin People |
| (E) Bright flat light | Dark-skinned, Elder men, |
| | Dull-skinned |

Among the fluorescent lamps L1 to L8 constituting the illumination devices 11 through 13, an arbitrary number (a plurality) of fluorescent lamps are illuminated as shown in Table 2 below so as to photograph the user (person to be photographed) 4.

As a result, a photograph of good quality is obtained in all of the cases listed in Table 2.

**[Table 2]**

| Experiment | Illumination state of the Fluorescent lamps L | | | | | | | |
|---|---|---|---|---|---|---|---|---|
| | L1 | L2 | L3 | L4 | L5 | L6 | L7 | L8 |
| 1 | - | ON | ON | - | - | ON | ON | - |
| 2 | ON | ON | - | ON | - | ON | ON | - |
| 3 | - | - | ON | - | ON | ON | ON | ON |
| 4 | ON | ON | ON | - | - | ON | ON | ON |
| 5 | ON | - | ON | ON | ON | ON | ON | ON |

In this embodiment, flash lamps may be used as the light sources used for the illumination devices 11 through 13 instead of the fluorescent lamps. Alternatively, the fluorescent lamp may be used as the light source of some of the illumination devices 11 through 13, whereas a flash light can be used as the light source of the remaining illumination devices 11 through 13.

In the case where flash lamps are used for the illumination device instead of the fluorescent lamps in this embodiment, it is suitable that the illumination devices 11 through 13 are arranged in the following manner so as to maintain a good illumination state.

Namely, in the illumination device 11, among a plurality of positions where the fluorescent lamps L1 to L6 are provided, a plurality of flash lamps are provided at two or more positions. A part of the flash lamps (at least one flash lamp) is arranged so that its light-emitting face is oriented toward the diffuser panel 24, whereas the other flash lamp (at least one flash lamp) is arranged so that its light-emitting face does not face the diffuser panel 24 (including a direction slanted to or parallel to the diffuser panel 24).

It is desirable to arrange at least one flash lamp so that its light-emitting face is oriented toward the ceiling.

In the illumination device 12, it is suitable to arrange a flash lamp so that its light-emitting face does not face the diffuser panel 12b.

In the illumination device 13, it is suitable to arrange a flash lamp so that its light-emitting face does not face the diffuser panel 13c.

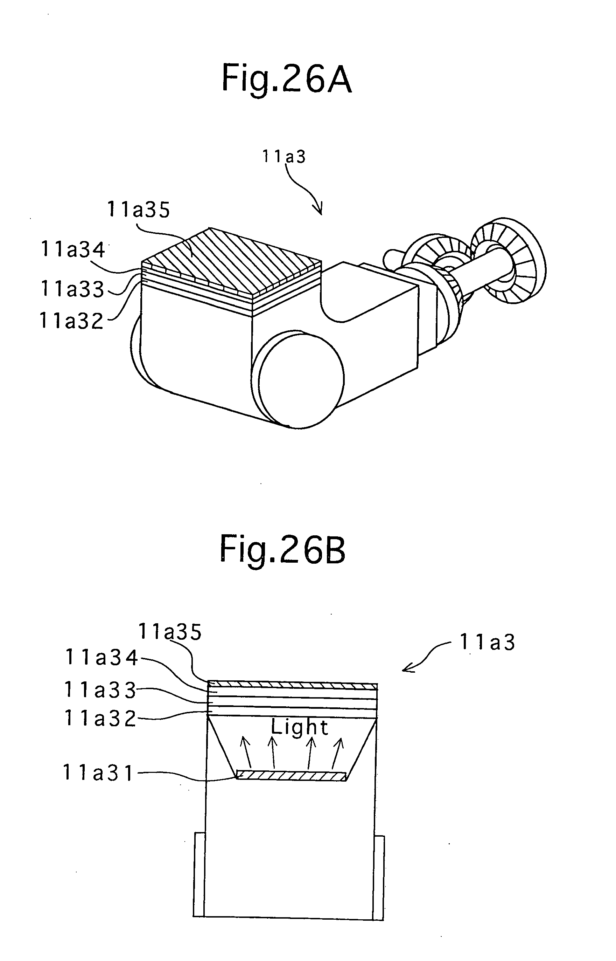

Figures 26A and 26B are illustrative views of a flash lamp 11a3 used in this embodiment.

If the light intensity is insufficient, the ND filter 11a34 can be omitted. Moreover, a portion of the ND filter 11a34 can be shielded so as to change the light-emitting conditions thereof. A flash lamp provided for each of the illumination devices 11 through 13 may have a different number of diffuser panels or ND filters or a diffusion characteristic, or can all have the same structure.

### (Embodiment 6)

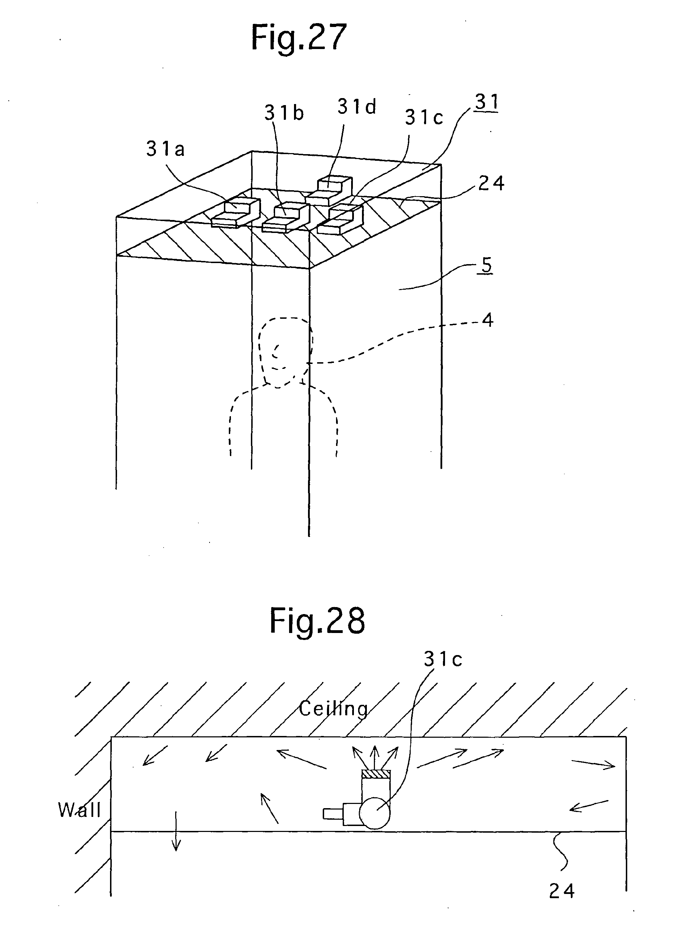

Figure 27 is a perspective view of a principal part of the photographing room 5 according to the sixth embodiment of the present invention, and Figure 28 shows an illustrative view of an upper portion of the photographing room 5.

The sixth embodiment differs from the fifth embodiment in that flash lamps 31a, 31b, 31c and 31d are provided as the light source of an illumination device 31. In this embodiment, the illumination conditions of the plurality of flash lamps 31a, 31b, 31c and 31d are varied based on an input signal through the input device 9. The flash lamps 31a through 31d are provided on the ceiling of the photographing room 5. The illumination device 31 includes a plurality of flash lamps (although four flash lamps 31a to 31d are used in Figure 9, the number of flash lamps may be any number equal to or larger than 2), and the diffuser panel (translucent white glass fiber diffuser) 24.

The illumination device 31 includes the four flash lamps 31a through 31d. The four flash lamps 31a through 31d are arranged so that their light-emitting faces are perpendicular or form a predetermined angle with respect to the ceiling (an angle formed between the ceiling and a normal of the light-emitting face is between 90Υ to 45Υ). Figure 28 shows the flash lamp 31c as an example, illustrating the case where the flash lamp 31c is arranged so that the light-emitting face is perpendicular to the ceiling.

After light is emitted from a plurality of flash lamps to be reflected by the ceiling (acting as a diffusing surface or being coated), the light passes through the diffuser panel 24 as diffuse light rays from the illumination device 31 for illuminating the user 4.

Similar to the fifth embodiment, in the sixth embodiment, a portion of the diffuser panel 24 provided on the ceiling is covered with the light-shielding member 25 as shown in Figure 23A so that the diffuse light from the diffuser panel 24 does not directly radiate the user (person to be photographed) 4. As a result, the user 4 is illuminated with soft light so as to obtain a photograph of good image quality.

In this embodiment, at least one of the flash lamps 31a through 31d can be arranged so that the light-emitting face thereof is oriented toward the ceiling, whereas the other flash lamp(s) can be arranged so that the light-emitting face is oriented toward the partition panel (wall) 2 or in a direction opposite to the partition panel 2.

In this embodiment, the light-emitting states of the of flash lamps 31a through 31d, for example, the number of flash lamps to emit light and/or the light-emitting directions thereof, are controlled based on input information through the input device so that the illumination conditions for the user 4 are variable.

Moreover, two illumination devices 11 and 12, or three illumination devices 11, 12 and 13 can be used to illuminate the user while varying the illumination state.

In this case, fluorescent lamps or flash lamps may be used in the illumination devices 12 and 13,.

In each of the above-described embodiments, each of the side faces and the back face of the photographing room 5 is constructed from a diffusing surface, or an openable/closable wall material coated with white paint, white curtain or white polyvinyl sheet, or the like.

The floor 34 is coated with white paint or a diffusing surface so as to reflect diffuse light from the illumination device 31 to efficiently illuminate the user (person to be photographed) 4.

As described in the fourth embodiment, a high-level portrait illumination technique is employed.

In addition, the combination of a photographic light source, a photographic lens and an image recording medium is appropriately set. As a result, light having a continuous gradation is produced within the box to obtain a portrait photograph of good image quality. In particular, a photograph similar to that photographed with light having a so-called "Golden Time" light quality is obtained.

In each of the embodiments described above, a video camera may be used as the imaging device so as to obtain a motion image instead of a still image.

Moreover, in each of the embodiments described above, an object other than a person may be placed in the region where the face of the user is otherwise positioned. As a result, a still-life photograph of good quality as a portrait photograph can be obtained.

According to the present invention, the following effects can be obtained by setting the elements as described above: the control of the irradiation state of the illumination light and the color temperature of the illumination light (the control of the irradiation of light having a continuous gradation and its color temperature, and the illumination conditions of the fluorescent lamp having a bright-line spectrum) can be performed in an excellent manner; soft light having a continuous gradation can be easily produced, so that the illumination conditions can be controlled with softer light; and the user (person to be photographed) 4 can be illuminated with horizontally asymmetrical light so as to produce a light effect like light at the so-called "Golden Time".

By controlling the diffuse light, the balance of the diffuse light within the box can be easily varied by changing the light sources to be used. By using such a technique, the user 4 is free to choose the adjusted illumination conditions via the input device 9.

According to the present invention, the user (person to be photographed) 4, who is situated in the photographing room, is illuminated with appropriate diffuse light (soft diffuse light having a continuous gradation) so as to obtain a photograph (an ID photograph, a portrait photograph) meeting the preferences of the user 4.

As a result, a box-type photographing apparatus, from which a photograph meeting the preferences of the user (who is situated inside the photographing room 5) can be easily obtained, can be achieved.

Furthermore, according to the present invention, the user, who is situated in the photographing room, is illuminated with diffuse light having little difference in illuminance and a continuously changing light intensity distribution (i.e., soft light having a continuous gradation) by using the portrait illumination technique. As a result, the photographing apparatus, from which an ID photograph (portrait photograph) of good quality can be easily obtained, can be achieved.

Obvious changes may be made in the specific embodiments of the present invention described herein, such modifications being within the spirit and scope of the invention claimed. It is indicated that all matter contained herein is illustrative and does not limit the scope of the present invention.

## Claims

1. A photographing apparatus provided in a box, comprising:
a photographing room in which a person to be photographed is situated; and
an equipment storage room for storing a photographing device for photographing said person to be photographed, and image-processing equipment for processing an image obtained by said photographing device, wherein said image-processing equipment outputs the processed image;
wherein said photographing room includes:
a plurality of illumination devices for illuminating said person to be photographed;
a display device for displaying a plurality of photograph data of images photographed under various illumination conditions in the photographing room; and
an input device for inputting an input signal for changing a illumination condition in the photographing room with reference to said photograph data.

2. The photographing apparatus according to claim 1, wherein at least one of the plurality of illumination devices comprises:
a light source;
a diffuser member for allowing light rays emitted from said light source to be diffuse-transmitted;
a light-shielding member for shielding a portion of said light rays on at least one of a light-incident side and a light-emitting side of said diffuser member; and
a control device;
wherein light-emitting directions of the light from said illumination devices are controlled by said control device so as to have an asymmetric illuminance distribution in a photographic space within the photographing room.

3. The photographing apparatus according to claim 1, wherein said illumination devices are arranged to be horizontally asymmetric with respect to a position of said person to be photographed in the photographing room, so as to have an asymmetric illuminance distribution in a photographic space within the photographing room.

4. The photographing apparatus according to claim 1, wherein each of the illumination devices includes at least one flash lamp; and at least one light diffuser panel and an ND filter are provided on a light-emitting side of said flash lamp.

5. The photographing apparatus according to claim 1, wherein said control device changes a illumination condition of said illumination devices by the input signal via the input device so as to change an illuminance distribution within the photographing room.

6. The photographing apparatus according to claim 1, wherein said box comprises a partition wall which divides said box into two spaces, said partition wall defining said photographing room;
wherein one of said illumination devices is provided on a ceiling of said photographing room and includes a plurality of light sources and a diffuser member;
wherein at least one of said light sources is arranged so that a light-emitting face thereof is oriented toward said partition wall, wherein the remainder of said light sources are arranged so that light-emitting faces thereof are oriented toward the ceiling; and
wherein light from said light sources is reflected by at least one of said partition wall and said ceiling to illuminate said person to be photographed through the diffuser member.

7. The photographing apparatus according to claim 1, wherein said box comprises a partition wall which divides said box into two spaces, said partition wall defining said photographing room;
wherein one of said illumination devices is provided on a ceiling of the photographing room and includes a plurality of flash lamps and a diffuser member;
wherein two of said flash lamps are arranged so that light-emitting faces thereof are oriented toward said partition wall, wherein the remainder of said flash lamps are arranged so that light-emitting faces thereof are oriented toward the ceiling; and
wherein light from said flash lamps is reflected by at least one of said partition wall and said ceiling to illuminate said person to be photographed through the diffuser member.

8. A photographing apparatus provided in a box, comprising:
a photographing room in which a person to be photographed is situated;
an equipment storage room for storing a photographing device for photographing said person to be photographed, and image-processing equipment for processing an image obtained by said photographing device, wherein said image-processing equipment outputs the processed image; and
a control device;
wherein the photographing room is provided with a plurality of illumination devices for illuminating the user;
wherein at least one of said illumination devices includes a light source, a diffuser member for allowing light rays emitted from said light source to be diffuse-transmitted, and a light-shielding member for shielding a portion of said light rays on at least one of a light-incident side and a light-emitting side of the diffuser member; and
wherein light-emitting directions of the light from said illumination devices are controlled by said control device so as to have an asymmetric illuminance distribution in a photographic space within the photographing room.

9. A photographing apparatus provided in a box, comprising:
a photographing room in which a person to be photographed is situated; and
an equipment storage room for storing photographing device for photographing said person to be photographed, and image-processing equipment for processing an image obtained by the photographing device to output the processed image;
wherein said photographing room is provided with a plurality of illumination devices for illuminating said person to be photographed; and
wherein said illumination devices are arranged to be horizontally asymmetric with respect to the position of said person to be photographed in the photographing room, so as to have an asymmetric illuminance distribution in a photographic space within the photographing room.

10. A photographing apparatus provided in a box, comprising:
a photographing room in which a person to be photographed is situated;
an equipment storage room for storing a photographing device for photographing said person to be photographed, and image-processing equipment for processing an image obtained by the photographing device, wherein said image-processing equipment outputs the processed image; and
an illumination device for illuminating said person to be photographed, said illumination device being provided on a ceiling of the photographing room and having a plurality of light sources, a diffuser member for diffusing light rays from said light sources, and a light-shielding member for shielding a portion of the light rays from said light sources.

11. The photographing apparatus according to claim 10, wherein said light sources are arranged asymmetrically in at least one of a horizontal direction and a length direction with respect to the position of said person to be photographed.

12. The photographing apparatus according to claim 10, wherein a light-shielding pattern of said light-shielding member is asymmetric in at least one of a horizontal direction and a length direction with respect to the position of said person to be photographed.

13. The photographing apparatus according to claim 10, wherein at least one illumination device for illuminating said person to be photographed is provided in the photographing room in addition to the illumination device on the ceiling;
wherein at least one of said illumination device includes a light source, a diffuser member for diffuse-transmitting light rays emitted from the light source, and a light-shielding member for shielding a portion of the light rays emitted from the light source.

14. The photographing apparatus according to claim 10, wherein the photographing room comprises:
a display device for displaying a plurality of photograph data obtained of photographic images taken under various illumination conditions; and
an input device for inputting an input signal for changing a illumination condition.

15. The photographing apparatus according to claim 14, further comprising a control device for changing a illumination condition of said illumination device according to said input signal via said input device so as to change an illuminance distribution within the photographing room.

16. The photographing apparatus according to claim 10, wherein said light sources of the illumination device provided on the ceiling are flash lamps; and
wherein at least one of said flash lamps is arranged so that a light-emitting face does not face the diffuser member, and wherein the remainder of said flash lamps are arranged so that light-emitting faces thereof are oriented toward the ceiling.

17. The photographing apparatus according to claim 10, wherein an illuminance distribution in the photographic space within the photographing room is asymmetric.
